Europäisches Patentamt

European Patent Office

Office européen des brevets

(19)

(11) Numéro de publication: **0 089 263**
**B1**

(12) **FASCICULE DE BREVET EUROPEEN**

(45) Date de publication du fascicule du brevet: **24.10.90**

(51) Int. Cl.⁵: **G 11 B 7/095, G 11 B 7/24**

(21) Numéro de dépôt: **83400427.7**

(22) Date de dépôt: **02.03.83**

(60) **Demande divisionnaire 90100358.2 déposée le 02/03/83.**

(54) **Support d'information mobile prégravé et dispositif optique de suivi de piste mettant en oeuvre un tel support.**

(30) Priorité: **12.03.82 FR 8204218**

(43) Date de publication de la demande:
**21.09.83 Bulletin 83/38**

(45) Mention de la délivrance du brevet:
**24.10.90 Bulletin 90/43**

(84) Etats contractants désignés:
**DE GB IT NL SE**

(56) Documents cités:
EP-A-0 021 411       EP-A-0 077 644
EP-A-0 023 868       FR-A-2 312 091
EP-A-0 032 271       FR-A-2 420 182
EP-A-0 077 641       GB-A-2 067 313
EP-A-0 077 642       US-A-3 919 697
EP-A-0 077 643

PATENTS ABSTRACTS OF JAPAN, vol. 5, no. 73(P-61)(745), 15 mai 1981, page 125P61 & JP - A - 56 22227 (TOKYO SHIBAURA DENKI K.K.) 02-03-1981

(73) Titulaire: **THOMSON-CSF**
**51, Esplanade du Général de Gaulle**
**F-92800 Puteaux (FR)**

(72) Inventeur: **Gerard, Jean-Louis**
**THOMSON-CSF SCPI 173, Bld. Haussmann**
**F-75379 Paris Cedex 08 (FR)**
Inventeur: **Bricot, Claude**
**THOMSON-CSF SCPI 173, Bld. Haussmann**
**F-75379 Paris Cedex 08 (FR)**
Inventeur: **Berthet, Pierre**
**THOMSON-CSF SCPI 173, Bld. Haussmann**
**F-75379 Paris Cedex 08 (FR)**

(74) Mandataire: **Thrierr, Françoise et al**
**THOMSON-CSF SCPI**
**F-92045 PARIS LA DEFENSE CEDEX 67 (FR)**

(56) References cited:
**PATENTS ABSTRACTS OF JAPAN, vol. 2, no. 116, septembre 1978, page 6644E78 & JP - A - 53 82303 (NIPPON VICTOR K.K.) 20-07-1978**

## Description

La présente invention concerne un support d'information mobile en particulier en forme de disque comportant des prégravures matérialisant des pistes le long desquelles des informations lisibles optiquement peuvent être enregistrées. L'invention concerne également un dispositif de suivi radial de ces pistes.

De nombreux procédés de suivi radial de pistes ont été décrits dans l'art connu. Lorsqu'il s'agit d'enregistrer des informations sous forme séquentielle, par exemple des informations vidéo, généralement les pistes ne sont pas matérialisées à l'avance mais plutôt créées en temps réel au moment de l'enregistrement. L'information est enregistrée le long des pistes ayant la forme d'une spirale unique s'étendant de la zone périphérique du disque vers une zone centrale ou l'inverse ou encore ayant la forme de cercles concentriques centrés sur l'axe de rotation du disque.

Dans les systèmes les plus simples, on compte sur la précision des organes d'avance de la tête d'enregistrement pour créer cette piste. Lors de la lecture, des informations enregistrées par exemple sous la forme de micro-reliefs, interfèrent avec un faisceau de lecture focalisé dans le plan de la face d'enregistrement du disque. Le défilement de ces micro-reliefs sous la tâche de focalisation module le faisceau et cette modulation est détectée à l'aide de cellules photoélectriques convertissant les variations d'intensité lumineuse en signaux électriques. Ces signaux électriques peuvent être également utilisés dans un but de suivi de pistes.

Le procédé qui vient d'être décrit nécessite que l'avance de la tête d'enregistrement doit présenter une très grande stabilité mécanique, ce pour éviter que deux sillons successifs ne se chevauchent ou du moins soient mal discernables lors de la lecture. Dans un but d'améliorer le système qui vient d'être décrit, il a été proposé dans la demande de brevet français publiée sous le numéro 2 366 636, un procédé utilisant la dernière piste inscrite ou l'une des pistes précédemment inscrite comme référence. Il est adjoint au système d'avance mécanique de la tête d'enregistrement un système de déflexion optique de la tache d'enregistrement. La tache de lecture est astreinte à suivre un sillon déjà inscrit de la piste par un asservissement de position classique. A l'aide du système de déflexion optique, la tache d'enregistrement est maintenue à une distance constante, et égale à un multiple entier du pas de la piste, de la tache de lecture.

Il est également connu du document US—A—3.919.697 de réaliser le suivi d'une piste au milieu d'un ensemble d'éléments adjacentes en subdivisant chaque élément de piste en sites réservés alternativement à l'information et à des motifs spécifiques permettant de contrecarrer toute tendance de la tache d'exploration à s'écarter de sa trajectoire idéale. Ces motifs spécifiques occupent des régions qui ne sont pas en vis à vis des blocs de données mais ils sont centrés par rapport à chaque élément de piste. Le recentrage de la tache d'exploration dépend exclusivement des interactions optiques avec les motifs présents sur les éléments de piste qui l'encadrent. La mesure de l'excentrement est indirecte et sensible à la variation du pas de la piste. En outre, si les motifs spécifiques occupent tous les sites réservés à leur intention, le signal indicateur de tendance ne peut être obtenu que si ces motifs forment des groupements distincts, ce qui nécessite une logique de prélèvement à fonctionnement cyclique. Pour éviter cette contrainte, on peut restreindre le nombre de sites occupés par les motifs sans possibilité de récupérer cette place perdue pour loger l'information.

Cependant, lorsque l'on désire enregistrer des informations de façon aléatoire, par exemple dans les applications concernant l'informatique, il n'est plus possible d'utiliser les procédés qui viennent d'être décrits ou des procédés analogues. Il est en général nécessaire de matérialiser à l'avance les pistes devant lesquelles des informations peuvent être enregistrées. Pour ce faire, il est d'usage de créer une prégravure sous quelque forme que ce soit. Dans un exemple de réalisation décrit dans la demande de brevet français publiée sous le numéro 2 365 854, lors de la fabrication du support, les pistes sont matérialisées sous la forme d'un sillon lisse créé dans une couche auxiliaire de ce support. Ces pistes peuvent être détectées même en l'absence de tout enregistrement d'information, cet enregistrement étant effectué dans une phase ultérieure dans une couche photosensible ou thermosensible en contact avec la couche auxiliaire.

Dans une variante préférée de l'art connu, les pistes prévravées peuvent être confondues avec les régions dans lesquelles sont enregistrées les informations. On obtient alors un système dit mono-piste.

Il est connu du document EP—A—0 032 271 un système monopiste dans lequel la prégravure consiste en un sillon continu au fond duquel il existe une modulation de relief marquant le commencement d'un secteur et donnant en outre dans les régions de stockage de l'information un marquage périodique destiné à synchroniser l'écriture et la lecture série des données binaires. Ce document prévoit que la marquage périodique peut exister soit au fond du sillon, soit à fleur de la surface du support d'information. Ce système a pour effet de permettre un suivi continu de la piste grâce à des propriétés particulières du code de modulation des données qui font que la densité spectrale du signal de lecture est affaiblie aux fréquences de fontionnement du dispositif de suivi de piste. Un filtre passe bas permet d'isoler le signal de suivi de piste, et de le débarasser des fréquences gênantes produites par la lecture des données.

Dans d'autres procédés, la piste ou les pistes prégravées sont distinctes des pistes le long desquelles sont enregistrées les informations. On obtient alors des systèmes dits bi-pistes ou multi- pistes. Pour discriminer ces deux types de pistes on peut faire en sorte que la prégravure consiste en un signal décomposable dans un premier spectre de fréquences et l'information décomposable dans un second spectre de fréquences disjoint. Lors de l'écriture, on peut utiliser le faisceau de lecture pour suivre la piste prégravée comme dans la seconde demande de brevet français précitée.

Le principal inconvénient du procédé qui vient d'être décrit est qu'il ne permet pas une densité d'enregistrement maximale puisqu'il nécessite, au minimum, une piste supplémentaire de prégravure pour une piste d'information prégravée. En outre, il nécessite l'utilisation de deux faisceaux, l'un pour le suivi de la piste prégravée et l'autre pour l'écriture ou la lecture d'informations sur la piste destinée à l'enregistrement.

Le document Patent Abstracts of Japan, Vol. 5, numéro 3 (P-61) (745), 15 Mai 1981, page 125 P61 qui correspond à JP—A—5 622 227 divulgue un support du type dit mono-piste, comportant une prégravure. Ces supports ne sont pas non plus exempts d'inconvénients. Ils nécessitent généralement l'utilisation de deux faisceaux, l'un d'enregistrement et l'autre de suivi radial. En outre, si la piste prégravée est facilement discernable du restant du disque (zones interpistes) en l'absence de l'enregistrement d'information, il n'en est plus de même lorsque des informations sont enregistrées. Il peut en résulter si des précautions ne sont pas prises, des inversions de contrastes conduisant à des erreurs de suivi.

Il est aussi connu du brevet EP—A—0 077 644 dont le contenu est compris dans l'état de la technique conformément aux articles 54(3) et 54(4) un support d'information comportant des prégravures comportant un premier motif centré de grosseur spécifique suivi de deux motifs décalés par rapport à l'axe moyen de la piste.

La présente invention propose une structure de support d'informations mobiles à prégravure en forme de disque palliant les inconvénients de l'art connu et compatible avec les systèmes monopistes-monofaisceau.

L'invention a donc pour objet un support d'information comprenant dans au moins une surface de référence optiquement enregistrable un ensemble d'éléments de piste adjacents le long desquels est agencée une suite de sites non contigus dédiés au stockage de l'information sous une forme optiquement lisible, lesdites sites de stockage étant séparés l'un de l'autre par des sites intercalaires comprenant des motifs pour matérialiser l'axe moyen non-sinueux desdits éléments de piste, lequel représente la trajectoire idéale que doit suivre le moyen transcripteur de ladite information; lesdits motifs se présentant sous la forme discrète de portions non-contingues à contours fermés de ladite surface de référence et conservant leurs caractéristiques optiques lors dudit stockage d'information, chacun desdits sites intercalaires comprenant au moins un premier motif centré par rapport audit axe moyen, caractérisé en ce que chacun desdits sites intercalaires comprend au moins un deuxième motif, lesdits motifs étant de même largeur perpendiculairement à l'axe moyen et formant conjointement le long dudit axe moyen une structure, spécifique par la longueur de ces deux motifs et/ou par leur répartition spatiale en longueur qui est identique à elle-même d'un site intercalaire au suivant.

Selon d'autres variantes de réalisation, chacun desdits sites intercalaires comprend au moins un deuxième motif, lesdits motifs formant conjointement le long dudit axe moyen une structure, spécifique par la longueur de ces deux motifis et/ou par leur répartition spatiale en longueur qui est identique à elle même d'un site intercalaire au suivant et en ce que le premier motif a une largeur perpendiculairement à l'axe moyen sensiblement équivalente à la largeur des pistes.

De même chacun desdits sites intercalaires comprend au moins un deuxième motif, décalé par rapport à cet axe; la projection sur un axe perpendiculaire à l'axe moyen du deuxième motif n'étant pas incluse dans la projection sur le même axe du premier motif, lesdits motifs formant conjointement le long dudit axe moyen une structure spécifique, par la longueur de ces deux motifs et/ou leur répartition spatiale en longueur qui est identique à elle-même d'un site intercalaire ou suivant.

L'invention a aussi pour objet un dispositif optique de suivi radial de piste se présentant dans au moins une surface de référence d'un support d'information sous la forme d'un ensemble d'éléments adjacents le long desquels est agencée une suite de sites non-contigus dédiés au stockage de l'information sous une forme optiquement lisible, lesdits sites de stockage étant séparés l'un de l'autre par des sites intercalaires comprenant chacun au moins un premier motif centré par rapport à un axe moyen non sinueux qui représente la trajectoire idéale que doit suivre le moyen d'exploration optique de ladite piste, lequel est constitué par une tache lumineuse astreinte par ledit dispositif à suivre ledit axe moyen; lesdits motifs étant des motifs de prégravure qui conservent leurs caractéristiques optiques lors dudit stockage d'information et se présentant sous la forme discrète de portions non-contigues à contours fermés de ladite surface de référence; ledit dispositif comprenant des moyens photodétecteurs délivrant en réponse au rayonnement émergeant de la portion de ladite surface de référence éclairée par ladite tache un signal électrique sensible au déplacement transverse de ladite tache par rapport auxdits éléments de piste et des moyens de mesure des variations, d'un motif de prégravure au suivant, lesdits moyens de mesure étant sensibles aux valeurs dudit signal prélevées exclusivement au cours de l'exploration desdits sites intercalaires et générant un signal compensateur destiné à maintenir ladite tache de lecture entre les trajectoires idéales des deux éléments de piste d'encadrement, caractérisé en ce que des moyens de décodage analysent ledit signal électrique, afin de reconnaître sélectivement l'exploration par ladite tache d'une structure spécifique par sa répartition spatiale en longueur et identique à elle-même d'un site intercalaire au suivant à l'exclusion des sites intercalaires comprenant au moins un premier motif centré de largeur supérieure à la largeur de piste; ladite structure comprenant conjointement dans chaque site intercalaire au moins ledit premier motif centré et au moin un second motif dont les longueurs et/ ou la répartition spatiale définissent un code qui permet d'identifier un site sans ambiguité; lesdites valeurs prélevées étant sélectionnées par des signaux de commande dérivés de la reconnaissance par lesdits moyens de décodage de chaque phase d'exploration de ladite structure spécifique; chaque valeur prélevée étant significative de l'interaction optique de ladite tache avec un motif de prégravure contribuant à matérialiser l'axe optique moyen de l'élément de piste en cours d'exploration; ledit signal compensateur changeant de valeur de manière discrète par modification de contenu d'un circuit à mémoire compris dans les moyens de mesure.

L'invention ser mieux comprise et d'autres caractéristiques apparaîtront à l'aide de la description qui suit en référence aux figures annexées et parmi lesquelles:

—la figure 1 représente un disque de l'art connu et un dispositif de suivi de piste sur un tel disque;

—la figure 2 représente une prégravure de disque selon l'art connu;

—les figures 3 à 6 représentent une prégravure de disque selon plusieurs variantes de réalisation conformes à l'invention;

—les figures 7 à 9 représentent les schémas électriques de dispositifs de suivi de piste selon plusieurs variantes d'exécution conformes à l'invention;

—les figures 10 et 11 sont des diagrammes explicatifs du fonctionnement du dispositif de l'invention.

L'invention concernant un support d'informations de type prégravé et un dispositif de suivi radial d'une des pistes d'un tel support d'information, il est utile de rappeler les éléments constitutifs principaux d'un système enregistreur et/ou lecteur de supports d'informations, notamment de supports en forme de disques lisibles et inscriptibles optiquement.

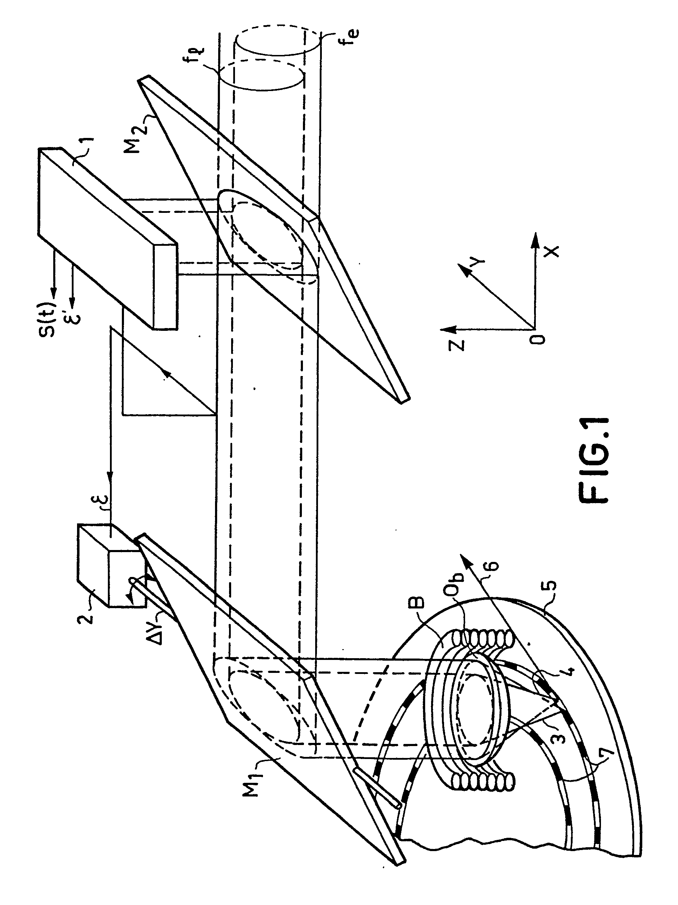

La figure 1 représente un support d'information 5 de l'art connu en forme de disque circulaire pouvant tourner dans un plan XOY autour d'un axe parallèle au troisième axe d'un trièdre de référence XYZ. La face inférieure de ce disque est ici supposée lisse; la face supérieure qui lui est parallèle est également lisse, mais comporte une piste prégravée 7 sous forme d'une piste lisse dont la largeur sensiblement constante est de l'ordre ou inférieur au micromètre.

On peut utiliser un tel disque, soit pour inscrire des informations en un point déterminé d'une des pistes lisses inscrites au préalable, soit pour lire des informations inscrites en un point quelconque de cette piste. Le disque, par exemple d'un diamètre d'environ 30 cm, est animé d'un mouvement de rotation communiqué par un moteur d'entrainement solidaire du chassis du système optique d'enregistrement-lecture. Dans cet exemple de réalisation, le dispositif d'accès à une piste prédéterminée du disque comprend une partie fixe comprenant deux sources d'énergie lumineuse (non représentées sur la figure 1) et une partie mobile constituée par la tête d'enregistrement-lecture. Comme il est connu, cette dernière comprend un objectif du type microscope $O_b$, solidaire d'une bobine électromagnétique B se déplaçant dans le champ magnétique d'un aimant permanent (non représenté) assurant l'asservissement vertical et un miroir galvanométrique $M_1$ assurant l'asservissement radial. Les sources d'énergie lumineuse, comme il est également connu, comprennent des sources lasers, par exemple des lasers à gaz He Ne ou semi-conducteurs. Les lasers à gaz délivrent un faisceau parallèle polarisé dont la section est très faible. Le faisceau laser doit être agrandi de façon à recouvrir la pupille d'entrée de l'objectif, ce quelque soit la position de l'objectif le long de l'axe optique. Pour réaliser cette exigence, il a été proposé dans la demande de brevet français FR—A—2 462 758 d'intercaler entre les sources d'énergie lumineuse et la tête d'enregistrement-lecture mobile une optique de type afocal.

Pour la lecture, un faisceau laser $f_1$ parallèle produit par une source laser (non représentée sur la figure 1), est agrandi à l'aide d'un afocal, dont le grossissement est tel que le faisceau émergeant, également parallèle, recouvre la pupille d'entrée de l'objectif $O_b$. Le miroir $M_1$ dévie les rayons se propageant parallèlement à une direction parallèle à l'axe OX. L'objectif $O_b$ focalise le faisceau de lecture au point 3 sur le disque support d'information 5. Ce disque est animé d'un mouvement de rotation symbolisé par la flèche 6. L'objectif et le miroir sont solidaires d'un équipage mobile constituant la tête d'enregistrement-lecture. L'avance de cet ensemble mobile peut être obtenue par tout moyen connu.

On utilise ensuite le même afocal pour le faisceau d'enregistrement $f_e$, lequel ayant été préalablement modulé. Afin de différencier les taches de lecture et d'enregistrement sur le disque, on incline très légèrement le faisceau d'enregistrement $f_e$ par rapport au faisceau de lecture $f_1$ de manière à ce que le décentrement du faisceau d'enregistrement sur la pupille d'entrée de l'objectif soit très limité et à ce qu'on puisse négliger le déplacement du faisceau lors d'un déplacement radiale de la tête. Il s'ensuit que quelque soit la position de l'objectif le long de l'axe optique, le faisceau d'écriture est focalisé au foyer de l'objectif. La tache d'écriture est facliasée au point 4.

La prégravure de la piste sous la forme d'un sillon "lisse" 7 peut se présenter sous différents aspects. Il peut s'agir par exemple d'une prégravure en creux, selon un ensemble d'éléments de pistes agencés selon des cercles concentriques ou organisés selon d'une spirale. La largeur des éléments de piste est choisie légèrement inférieure au diamètre de la tache lumineuse et ces éléments sont séparés par des plages interpistes dont la largeur est légèrement supérieure à la largeur de la piste. La surface supérieure du support reçoit une couche mince appropriée à l'inscription par un procédé thermooptique. Cette disposition d'éléments permet d'explorer la piste avant inscription, car l'interaction de la tâche de lecture avec la piste fournit un rayonnement dispersé, alors que les plages interpistes ne sont pas génératrices de dispersion.

En ce qui concerne la phase d'enregistrement du disque, l'insolation de la couche sensible servant à l'inscription est effectuée par une tache dont l'intensité est modulée par exemple par un signal électrique en créneaux de largeurs variables ou constantes selon les applications qui constituent le support de l'information. L'incorporation de l'information dans le signal modulateur est effectuée selon le cas, par modulation de fréquence ou de phase, ou par tout mode de codage capable de fournir un message codé par impulsions; l'information peut aussi être elle-même directement le signal modulateur.

Pour détecter les faisceaux de lecture réfléchis par le disque, ou interpose, par exemple, une lame semi-transparente $M_2$ sur le trajet du faisceau $f_1$. Le faisceau réfléchi est alors envoyé vers des moyens photodétecteurs et de traitement de signal qui peuvent délivrer d'une part un signal d'erreur $\varepsilon$ qui permet de commander le moteur 2 permettant de piloter la position du miroir $M_1$, en réalisant ainsi un asservissement radial, d'autre part un signal d'erreur $\varepsilon'$ qui permet de commander la bobine B solidaire de l'objectif OB en réalisant ainsi un asservissement de focalisation. Toutes ces techniques bien connues de l'homme de métier et sortent du cadre de l'invention.

Les moyens de traitement peuvent délivrer aussi un signal S(t) représentatif des informations utiles enregistrées sur le disque. En effet lors du défilement des éléments enregistrés sur les pistes 7, on recueille en lecture un signal S(t) qui traduit fidèlement les variations temporelles du signal enregistré sur la piste.

En phase écriture, le faisceau de lecture $f_1$ est utilisé pour assurer l'asservissement radial à l'aide de la prégravure mais peut également être utilisé dans un but de contrôle en temps réel de l'information en cours l'enregistrement ou "monitoring" selon l'expression anglosaxonne couramment utilisée.

Bien que ne nécessitant qu'une surface correspondant à la largeur d'une seule piste, par contraste aux procédés qui mettent en oeuvre une ou deux pistes prégravées adjacentes ou encadrant la piste utile, le procédé de l'art connu qui vient d'être rappelé en relation avec la figure 1, présente cependant des inconvénients.

Tout se passe, du point de vue détection, comme si les pistes étaient plus sombres que les zones interpistes. Tout écart de suivi de piste peut donc être facilement détecté grâce à ce contraste d'amplitude. Lorsque la couche recouvrant le support est soumise au rayonnement inscripteur, les zones inscrites peuvent être éclaircies pour certains matériaux thermosensibles, ce qui contribue à créer un bon contraste le long de la piste. Cependant ces zones éclaircies tendent à se confondre avec la densité plus faible des interpistes avoisinants, ce qui fait perdre radialement le contraste nécessaire pour assurer un bon suivi de piste.

On voit donc que l'inscription nuit au bon repérage radial des pistes dans toutes les zones où la couche a emmagasiné des données.

En outre deux faisceaux différents doivent être mis en oeuvre, au moins pendant les périodes d'inscription: un faisceau d'écriture et un faisceau de lecture et/ou de suivi radial.

L'invention propose un disque optique de type prégravé permettant, entre autres avantages, simultanément, une configuration monopiste et ne nécessitant l'utilisation que d'un seul faisceau, ce sans interférence de la prégravure avec la gravure représentant l'information utile.

Selon la caractéristique principale de l'invention, la prégravure se présente sous la forme d'éléments discrets ou drapeaux qui seuls définissent l'axe moyen de la piste à suivre. Cette piste est donc virtuelle. Compte-tenu de la vitesse de rotation de disque, la répartition spatiale de ces éléments de prégravure doit être suffisante pour satisfaire le critère de SHANNON: typiquement sur un disque de 30 cm de diamètre dont une couronne de largeur 8 cm représente la zone utile d'enregistrement, 40,000 pistes environ sont disponibles et comportent chacune de l'ordre de 3500 drapeaux.

Dans ce qui suit, l'enregistrement de données numériques étant l'application principale envisagée dans le cadre de la présente invention, ce sans être limitatif, il sera décrit un support sur lequel les pistes sont réparties selon des cercles concentriques et équidistants.

L'information utile est enregistrée entre deux drapeaux successifs. Dans ce cadre, si l'on désire une configuration d'enregistrement sous forme de bloc, la répartition spatiale des drapeaux est de façon préférentielle uniforme.

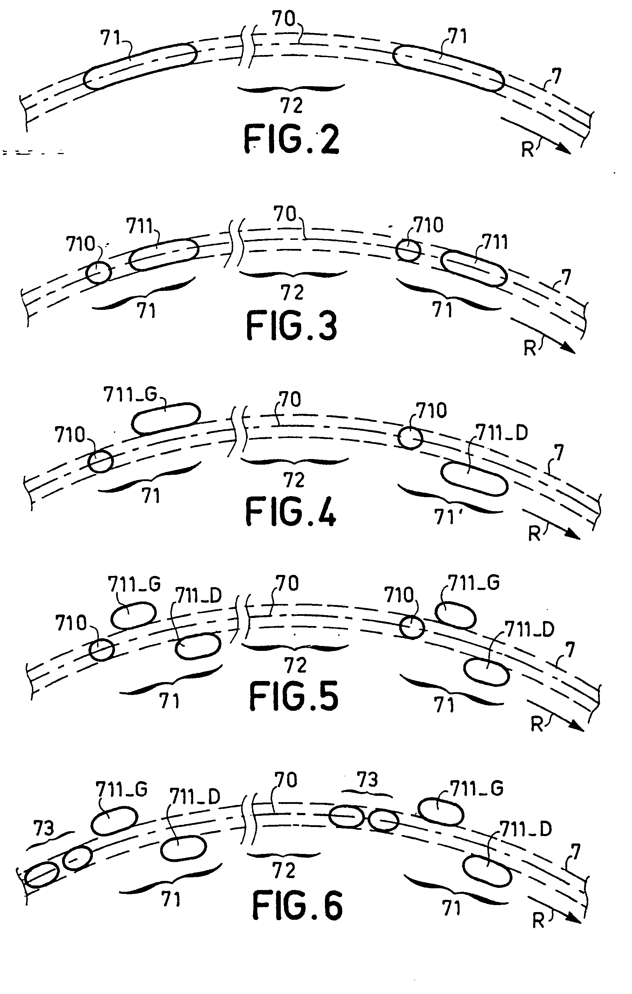

La figure 2 illustre un premier exemple de réalisation conforme à l'état de la technique. La prégravure se présente sous la forme de tronçons de pistes lisses 71 définissant l'axe moyen 70 de pistes le long desquelles peuvent être enreigstrées les informations. Comme il vient d'être rappelé, entre deux drapeaux 71 identiques, il existe une zone vierge toute information 72 avant enregistrement. Le sens de rotation du disque à été représentée sur la figure 2 par la flèche R.

Il doit bien être entendu que la piste 7 représentée sur la figure est une piste virtuelle dont l'axe moyen 70 représente la trajectoire idéale que doit suivre un faisceau d'écriture.

Pour ce faire, les signaux nécessaires à l'asservissement radial de la tête d'écriture seront dérivés de la détection des drapeaux 71 par des moyens de suivi de piste qui seront décrits de façon plus détaillée dans ce qui suit. La tête d'enregistrement peut être une tête analogue à celle illustrée par la figure 1. Lorsque les éléments de prégravure 71 défilent sous la tache de focalisation d'un faisceau de suivi de piste qui peut être le faisceau de lecture ou comme il sera également détaillé ultérieurement, le faisceau d'écriture, un signal de suivi de piste peut être généré de façon classique. A titre d'exemple il peut être utilisé la méthode dite de "push-pull" qui consiste à utiliser deux cellules photodétectrices détectant chacune une fraction du faisceau de suivi de piste, soit après reflexion, soit après transmission au travers du disque. Les deux cellules sont disposées dans l'espace de part et d'autre de l'axe optique du faisceau et les signaux électriques produits par ces deux cellules sont transmis aux entrées d'un amplificateur différentiel qui en effectue la somme algébrique. Lorsque la tâche du faisceau de suivi de piste est centrée sur la piste, le signal en sortie de l'amplificateur est nul. Lorsqu'il y a apparition d'un décentrement, l'amplitude et le signe de ce signal est représentatif du sens et de l'amplitude de ce décentrement. Ce signal est transmis au circuit d'asservissement radial, 2 sur la figure 1.

A la différence des procédés connus, les moyens de traitement des signaux doivent mémoriser la mesure pendant l'interval de temps s'écoulant entre deux passages de drapeaux successifs dans la zone éclairée par la tache de suivi de piste. Selon l'invention, le signal d'asservissement peut être déduit de l'évolution du signal mesuré à ces deux instants.

Il est également nécessaire, si l'on ne désire enregistrer des informations que dans la zone utile 72 localisée entre deux drapeaux 71 successifs, d'inhiber le faisceau d'écriture lorsqu'un de ces drapeaux se trouve dans la zone éclairée par la tâche d'écriture. La discrimination entre les drapeaux et l'information enregistrée entre deux drapeaux peut être facilitée si ces drapeaux sont dotés d'une structure qui permet de les identifier sélectivement.

La figure 3 illustre une telle réalisation. Chaque drapeaux 71 est divisé en plusieurs tronçons 710, 711 dont les longueurs et la répartition spatiale définissent un code qui permet d'identifier un drapeau sans ambiguité.

Pour améliorer la qualité de l'asservissement radial, il est également connu de wobuler le faisceau de suivi en lui imprimant une légère oscillation à fréquence fixe de part et d'autre de l'axe moyen de la piste. Dans une variante préférée de l'invention, on peut créer cette wobulation à l'aide de motifs assymétriques par rapport à l'axe 70 du suivi. Pour ce faire chaque drapeau comporte, outre un ou plusieurs tronçons centrés sur l'axe moyen de la piste et indiquant le début du drapeau, un ou plusieurs autres tronçons décalés par rapport à cet axe moyen.

Dans une première variante, la plus simple, illustrée par la figure 4, un premier drapeau 71 comporte un tronçon 710 centré sur l'axe moyen de la piste 70 et un second tronçon 711-G décalé à gauche de cet axe. Le drapeau suivant 71' comporte également un premier tronçon 710 centré sur l'axe moyen 70 et un second tronçon 711-D décalé à droite de l'axe. Cette succession est répétée. L'écart entre les tronçons décalés et l'axe 70 de la piste est de l'ordre d'une fraction de la largeur de la tache de suivi.

Dans une seconde variante, chaque drapeau comporte au moins un tronçon décalé à gauche et un tronçon décalé à droite. Cette variante est illustrée par la figure 5. Cette variante présente l'avantage d'offrir une fréquence d'échantillonnage de signal d'erreur de suivi de piste double de la variante précédente. En effet, il n'est pas nécessaire d'attendre le passage de deux drapeaux successifs pour élaborer un signal d'erreur de suivi de piste.

Enfin, il peut être avantageux de combiner les avantages de la structure illustrée par la figure 3 à ceux de la structure illustrée par la figure 5. Une telle configuration est illustré par la figure 6. On associe au drapeau principal 71, comprenant des tronçons décalés de part et d'autre de l'axe moyen 70 utilisé pour générer un signal d'erreur de suivi radial, un deuxième drapeau 73 utilisé pour générer un signal de synchronisation. De façon préférentielle le drapeau 73 représente un code particulier qui permet de l'identifier sélectivement par rapport aux autres informations enregistrées.

La manière précise dont les informations sont enregistrées sort du cadre de l'invention. Tout procédé connu peut être utilisé. Les drapeaux 71, 71' et les informations utiles enregistrés dans les zones 72 peuvent pour fixer les idées et sans que cela soit limitatif, être constitués de microreliefs en creux ou en bosse, par example par ablation d'une couche superficielle à l'aide du faisceau laser d'écriture. De manière préférentielle, les portions de drapeaux ont tous la même largeur et les portions décalées 711-G et 711-D ont même longueur et même décalage.

Un dispositif de suivi de piste d'un type portant des prégravures conforme à l'invention, c'est-à-dire constituées d'éléments discrets répartis suivant une piste et délimitant des zones utiles destinées à l'enregistrement de données va maintenant être décrit. Le système d'enregistrement-lecture d'informations sur le disque peut être analogue à celui qui a été décrit en relation avec la figure 1. Les éléments identiques ne seront pas décrits à nouveau. Seul le circuit repéré 1, élaborant le signal d'erreur de suivi radial est spécifique.

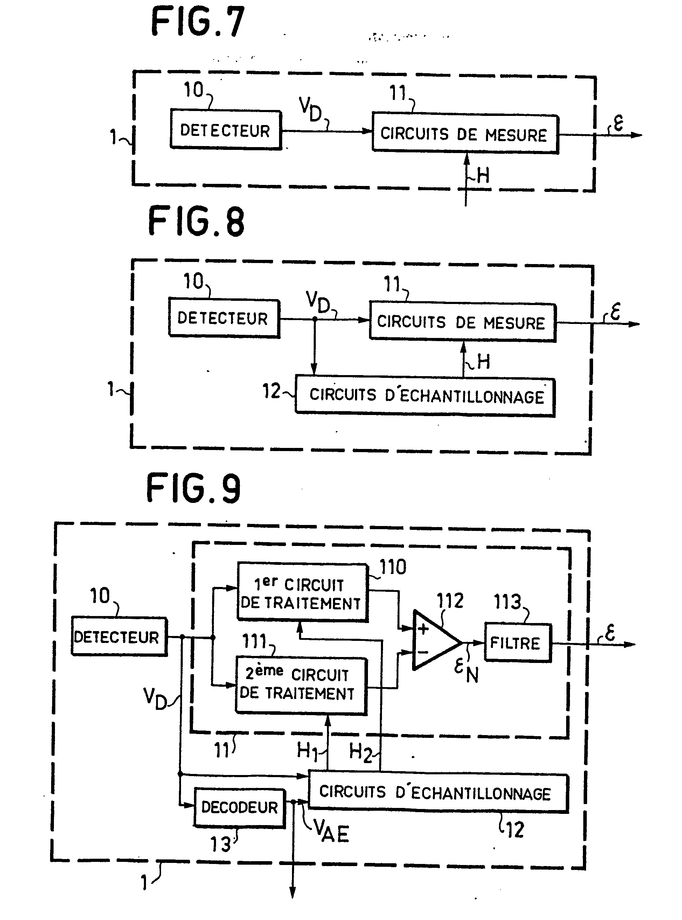

La figure 7 illustre une première variante, simplifiée, d'un tel circuit. Cette variante est plus particulièrement adaptée à des prégravures du type illustré par la figure 1. Il comprend un détecteur photoélectrique 10 et un circuit de mesure 11 élaborant le signal d'erreur de suivi radial ε. Le détecteur 10 peut comprendre deux cellules comme il a été rappelé précédemment. Les signaux de sorties de ces cellules $V_D$ sont transmis à des circuits de mesure 11 pouvant comprendre un amplificateur différentiel comme il a été également décrit. Cependant il faut effectuer, selon l'invention, des mesures uniquement pendant les temps de passage des drapeaux dans les zones éclairées par la tache de suivi radial. Se l'enregistrement de données est organisé par bloc, un signal d'horloge H nécessaire à la synchronisation de la mesure peut être déduit de la longueur des blocs et de la vitesse de rotation du disque. Ces impulsions d'horloge peuvent être transmises à une borne d'entrée d'horloge d'un circuit échantillonneur bloqueur recevant sur son entrée le signal produit par l'amplificateur différentiel et générant sur sa sortie un signal ε, mémorisé d'une impulsion à l'autre, représentant l'écart de suivi radial. Ce signal peut être lissé à l'aide d'un filtre passe-bas.

La figure 8 illustre une seconde variante de circuit s'appliquant plus particulièrement à des prégravures du type illustré par la figure 3, c'est-à-dire codées et identifiables par elles-mêmes. Les signaux $V_D$ sont transmis à des circuits d'échantillonnage 12 comprenant un décodeur générant un signal de synchronisation H transmis aux circuits de mesure lorsque le code lu correspond au code spécifique des drapeaux. Le signal de synchronisation H autorise la mise en compte de la mesure et la génération d'un signal d'erreur de suivi radial.

La figure 9 illustre une troisième variante de dispositif de suivi de piste spécialement adapté aux drapeaux du type comportant des portions décalées par rapport à l'axe moyen de pistes et plus particulièrement à la prégravure du type illustré par la figure 6 comprenant un premier drapeau 73 de synchronisation et une second drapeau utilisé dans un but d'élaboration d'un signal d'erreur de suivi de piste. Les moyens de détection 10 peuvent être constitués dans ce cas par un détecteur unique fournissent des signaux électriques $V_D$ d'une part au circuit de mesure 11 et d'autre par à des circuits d'échantillonnage 12 et à un décodeur 13. Ce décodeur détecte sélectivement le passage des drapeaux de synchronisation 73 dans la zone éclairée par la tache de suivi de piste et élabore un signal d'autorisation d'échantillonnage $V_{AE}$ transmis aux circuits d'échantillonnages 12. L'élaboration d'un signal d'erreur de suivi radial peut s'effectuer, selon deux variantes principales, soit par échantillonnage crête ou lorsque les portions décalées sont de mêmes longueurs, par intégration. On associe à la lecture de chacune des marques décalées 711-G et 711-D un circuit de traitement de signal, respectivement 110 et 111. Si on met en oeuvre un procédé par échantillonnage crête, ces circuits peuvent être constitués de circuits du type échantillonneur-bloqueur. Dans le second cas, lorsqu'on met en oeuvre un procédé par intégration, ces circuits peuvent être constitués par un intégrateur associé à un circuit de mémorisation. Comme il est connu, le circuit d'intégration peut être à base d'un intégrateur commandé associé à une mémoire analogique (condensateur par exemple). Les circuit d'échantillonnages 12 dont le fonctionnement est autorisé par le signal de synchronisation $V_{AE}$ ont pour but d'élaborer des signaux $H_1$ et $H_2$ synchronisant la prise en compte des mesures effectuées respectivement sur les portions décalées à gauche et à droite des drapeaux 71. Ces signaux sont transmis au premier et second circuits de traitement 110 et 111. Ces circuits d'échantillonnage reçoivent également les signaux générés par le détecteur 10.

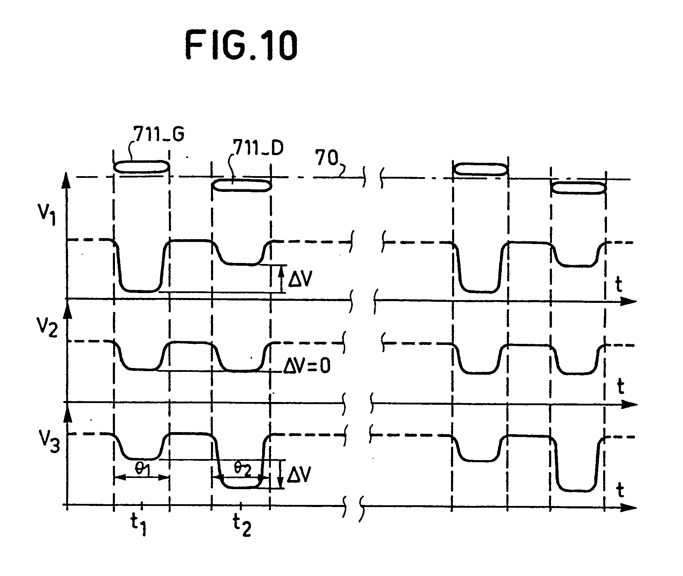

Le diagramme de la figure 10 illustre les trois possibilités caractéristiques da la position de la tache de suivi de piste par rapport à l'axe moyen de la piste 70. Sur la partie supérieure du diagramme, la courbe $V_1$ illustre le cas ou la tache de suivi de piste est décalée à gauche de l'axe moyen de la piste, étant entendu que le sens de rotation est celui indiqué par la flèche R sur la figure 6. Dans ce cas l'interaction du tronçon 711-G sur le faisceau de suivi de piste est plus importante que celle du tronçon 711-D. La courbe $V_1$ représente la valeur absolue de l'amplitude de signal électrique fourni par les moyens de détection 10. Le signal $V_1$ présente une variation d'amplitude plus importante, pendant la fenêtre de temps $\theta_1$ qui correspond au passage dans la zone éclairée par la tache de suivi de piste de la portion 711-G, que la variation d'amplitude pendant la fenêtre de temps $\theta_2$ qui correspond au passage de la portion 711-D. Les différences d'amplitude et de signe entre ces deux signaux sont représentatives du sens et de l'amplitude du décalage de la tache par rapport à l'axe moyen de la piste. En dehors de ces fenêtres, en l'absence de gravure, le signal fourni par les moyens de détection reste constant.

Dans la partie médiane du diagramme, la courbe $V_2$ illustre le cas ou tache de suivi de piste est centrée sur l'axe moyen de la piste. Les variations du signal fourni par les moyens de détection 10 dans les fenêtres $\theta_1$ et $\theta_2$ sont identiques.

Sur la partie inférieure du diagramme, la courbe $V_3$ représente le cas où la tache de suivi de piste est décalée à droite par rapport à l'axe moyen du suivi de la piste.

Si un procédé d'intégration est mis en oeuvre, les circuits d'échantillonnage élaborent à partir des signaux électriques fournis par les moyens de détection 10 et du signal d'autorisation du décodeur $V_{AE}$ deux impulsions $H_1$ et $H_2$ coincident avec les fenêtres de temps $\theta_1$ et $\theta_2$. Ces deux impulsions autorisent le fonctionnement pendant leurs durées respectives des premier et second intégrateurs 110 et 111.

Si le procédé d'échantillonnage crête est mis en oeuvre, il est alors nécessaire de fournir aux deux circuits échantillonneur-bloqueurs 110 et 111 deux impulsions de brève durée, $H_1$ et $H_2$, centrées sur les temps $t_1$ et $t_2$ milieu des fenêtres $\theta_1$ et $\theta_2$. Chaque échantillonneur-bloqueur prends en compte, par exemple sur le front montant de l'impulsion qui lui est transmise, le signal fournit par les moyens de détection 10. La valeur des signaux ainsi échantillonnés est ensuite mémorisé jusqu'à la prochaine mesure. Les sorties des deux circuits de traitement des signaux 110 et 111 sont connectées aux entrées d'un comparateur 112 qui peut être constitué par un amplificateur différentiel et qui fournit sur sa sortie un signal en

escalier $\varepsilon_N$ représentant l'erreur de suivi radial. Pour être réellement exploitable, il est utile de lisser ce signal à l'aide d'un filtre passe-bas 113 dont la sortie fourni l'erreur de suivi radial $\varepsilon$.

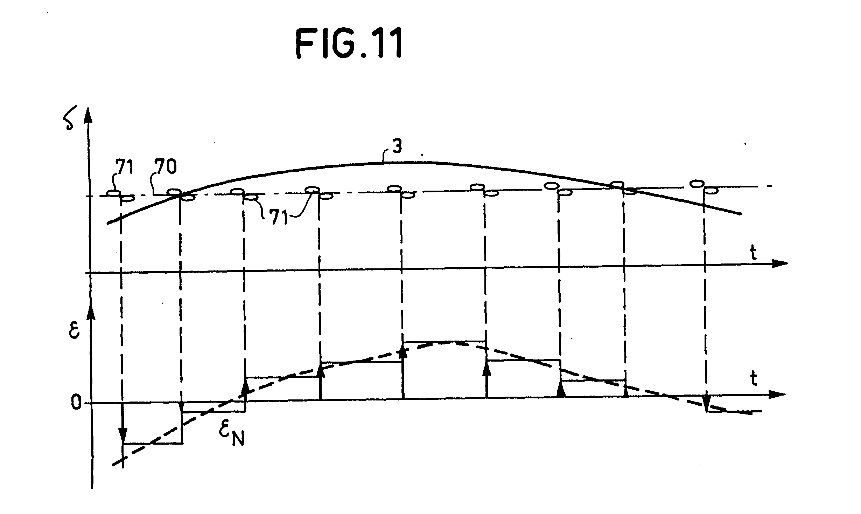

La figure 11 représente un exemple de variation de décalage $\delta$ de la tache de suivi radial 3 par rapport à l'axe moyen 70 d'une piste ce en fonction du temps. Sur la partie inférieure du même diagramme, il est représenté la variation correspondante du signal d'erreur $\varepsilon$ en fonction du temps par la courbe en pointillés. La variation du signal numérique erreur de suivi radial $\varepsilon_N$ est également représentée sur ce même diagramme. Ce dernier signal varie au rythme du passage des drapeaux 71 sous la tache de suivi radial et il reste constant entre deux passages successifs.

Dans une variante préférée de l'invention, un seul faisceau est mis en oeuvre. Pour ce faire, pendant les périodes d'enregistrement d'information, le faisceau d'écriture est utilisé séquentiellement comme faisceau de suivi de piste pendant les invervalles de passage de drapeaux 71 dans la zone éclairée par la tache produite par ce faisceau et comme faisceau d'écriture dans les autres intervalles de temps. Pour ce faire, les circuits d'écriture sont inhibés lors du passage des drapeaux. On peut utiliser le signal produit par le décodeur 12: $V_{AE}$, éventuellement après inversion logique, pour inhiber les circuits d'écritures. Les circuits d'écriture sont les circuits classiques communs à l'art connu qui ne nécessitent pas de description particulière. Le même faisceau d'écriture est utilisé également pour la lecture. Pour ce faire, on intercale, comme il est connu, un modulateur optique atténuant l'intensité lumineuse de ce faisceau pour un laser à gaz. Dans le cas d'un laser semi-conducteur l'intensité de l'énergie émise est modulable directement par la tension polarisation. Comme précédemment, le signal $V_{AE}$ peut être transmis aux circuits de lecture pour ihiber cette lecture lors du passage des drapeaux.

L'invention présente donc les avantages simultanés des systèmes monopistes, c'est-à-dire un maximum de densité d'enregistrement, compte-tenu que les drapeaux n'occupent qu'une faible surface par rapport à l'information utile, et des systèmes monofaisceaux, c'est-à-dire la simplicité et la réduction du coût.

## Revendications

1. Support d'information comprenant dans au moins une surface de référence optiquement enregistrable un ensemble d'éléments de piste adjacents (7) le long desquels est agencée une suite de sites non contigus (72) dédiés au stockage de l'information sous une forme optiquement lisible, lesdits sites de stockage (72) étant séparés l'un de l'autre par des sites intercalaires (71) comprenant des motifs pour matérialiser l'axe moyen non-sineux (70) desdits éléments de piste (7), lequel représente la trajectoire idéale que doit suivre le moyen transcripteur de ladite information; lesdits motifs se présentant sous la forme discrète de portions non-contigues à contours fermés de ladite surface de référence et conservant leurs caractéristiques optiques lors dudit stockage d'information, chacun desdits sites intercalaires comprenant au moins un premier motif centré par rapport audit axe moyen (70), caractérisé en ce que chacun desdits sites intercalaires comprend au moins un deuxième motif (711-G ou 711-D), lesdits motifs étant de même largeur perpendiculairement à l'axe moyen (7C) et formant conjointement le long dudit axe moyen (7C) une structure, spécifique par la longueur de ces deux motifs et/ou par leur répartition spatiale en longueur qui est identique à elle-même d'un site intercalaire au suivant.

2. Support d'information comprenant dans au moins une surface de référence optiquement enregistrable un ensemble d'éléments de piste adjacents (7) le long desquels est agencée une suite de sites non contigus (72) dédiés au stockage de l'information sous une forme optiquement lisible, lesdits sites de stockage (72) étant séparés l'un de l'autre par des sites intercalaires (71) comprenant des motifs pour matérialiser l'axe moyen non-sinueux (70) desdits éléments de piste (7), lequel représente la trajectoire idéale que doit suivre le moyen transcripteur de ladite information; lesdits motifs se présentant sous la forme discrète de portions non-contigues à contours fermés de ladite surface de référence et conservant leurs caractéristiques optiques lors dudit stockage d'information, chacun desdits sites intercalaires comprenant au moins un premier motif centré par rapport audit axe moyen (70), caractérisé en ce que chacun desdits sites intercalaires comprend au moins un deuxième motif (711-G ou 711-D), lesdits motifs formant conjointement le long dudit axe moyen (70) une structure, spécifique par la longueur de ces deux motifs et/ou par leur répartition spatiale en longueur qui est identique à elle-même d'une site intercalaire au suivant et en ce que le premier motif à une largeur perpendiculairement à l'axe moyen sensiblement équivalente à la largeur des pistes.

3. Support d'information comprenant dans au moins une surface de référence optiquement enregistrable un ensemble d'éléments de piste adjacents (7) le long desquels est agencée une suite de sites non contigus (72) dédiés au stockage de l'information sous une forme optiquement lisible, lesdits sites de stockage (72) étant séparés l'un de l'autre par des sites intercalaires (71) comprenant des motifs pour matérialiser l'axe moyen non-sinueux (70) desdits éléments de piste (7), lequel représente la trajectoire idéale que doit suivre le moyen transcripteur de ladite information; lesdits motifs se présentant sous la forme discrète de portions non-contigues à contours fermés de ladite surface de référence et conservant leurs caractéristiques optiques lors dudit stockage d'information, chacun desdits sites intercalaires comprenant au moins un premier motif centré par rapport audit axe moyen (70), caractérisé en ce que chacun desdits sites intercalaires comprend au moins un deuxième motif (711-G ou 711-D), décalé par rapport à cet axe; la projection sur un axe perpendiculaire à l'axe moyen (7C) du deuxième motif (711-G ou 711-D) n'étant pas incluse dans la projection sur le même axe du premier motif (710), lesdits motifs formant conjointement le long dudit axe moyen une structure spécifique, par la longueur de ces deux motifs et/ou leur répartition spatiale en longueur qui est identique à elle-même d'un site intercalaire ou suivant.

4. Support selon les revendications 1 à 3, caractérisé en ce que la répartition spatiale desdits sites intercalaires (71) le long desdits éléments de piste (7) est uniforme.

5. Support selon l'une quelconque des revendications 1 à 4, caractérisé en ce que le support étant en forme de disque, lesdits axes moyens (70) desdits éléments de piste (7) épousent dans ladite surface de référence la forme de cercles en spires concentriques équidistants.

6. Support selon l'une quelconque des revendications 1 à 5, caractérisé en ce que chacun desdits motifs centrés est un tronçon de piste lisse de largeur constante définie par une altération optiquement détectable de ladite surface de référence.

7. Support selon l'une quelconque des revendications 1 à 6, caractérisé en ce que chacun des deux sites intercalaires (71, 71') contigus à l'un quelconque desdits sites de stockage (72) est muni d'un motif de prégravure auxiliaire qui présente un déport latéral par rapport audit axe moyen (70); ledit axe moyen (70) étant situé à égale distance dudit motif de prégravure auxiliaire et d'un autre motif de prégravure auxiliaire présentant un déport latéral en sens contraire et d'égale ampleur; lesdits motifs de prégravure auxiliaires occupant des positions prédéterminées par rapport à ladite structure.

8. Support selon la revendication 7, caractérisé en ce que deux sites intercalaires (71, 71') consécutifs comprennent respectivement un motif en déport (711-G) décalé d'un côté dudit axe moyen (70) et un motif en déport (711-D) décalé de l'autre côté dudit axe moyen (70).

9. Support selon la revendication 7, caractérisé en ce que chaque site intercalaire (71, 71') comprend successivement un premier motif en déport (711-G) décalé d'un côté dudit axe moyen (70) et un second motif en déport (711-D) décalé de l'autre côté dudit axe moyen (70).

10. Dispositif optique de suivi radial de piste se présentant dans au moins une surface de référence d'un support d'information sous la forme d'un ensemble d'éléments adjacents (7) le long desquels est agencée une suite de sites non-contigus (72) dédiés au stockage de l'information sous une forme optiquement lisible, lesdits sites de stockage (72) étant séparés l'un de l'autre par des sites intercalaires (71) comprenant chacun au moins un premier motif centré par rapport à un axe moyen non sinueux (70) qui représente la trajectoire idéale qui doit suivre le moyen d'exploration optique de ladite piste, lequel est constitué par une tache lumineuse astreinte par ledit dispositif à suivre ledit axe moyen (70); lesdits motifs étant des motifs de prégravure qui conservent leurs caractéristiques optiques lors dudit stockage d'information et se présentant sous la forme discrète de portions non-contigues à contours fermés de ladite surface de référence; ledit dispositif comprenant des moyens photodétecteurs (10) délivrant en réponse au rayonnement émergeant de la portion de ladite surface de référence éclairée par ladite tache un signal électrique (VD) sensible au déplacement transverse de ladite tache par rapport auxdits éléments de piste et des moyens de mesure (11) des variations, d'un motif de prégravure au suivant, lesdits moyens de mesure étant sensibles aux valeurs dudit signal prélevées exclusivement au cours de l'exploration desdits sites intercalaires et générant un signal compensateur (ε) destiné à maintenir ladite tache de lecture entre les trajectoires idéales des deux éléments de piste d'encadrement, caractérisé en ce que des moyens de décodage analysent ledit signal électrique, afin de reconnaître sélectivement l'exploration par ladite tache d'une structure spécifique par sa répartition spatiale en longueur et identique à elle-même d'un site intercalaire au suivant à l'exclusion des sites intercalaires comprennant au moins un premier motif centré de largeur supérieure à la largeur de piste; ladite structure comprenant conjointement dans chaque site intercalaire au moins ledit premier motif centré et au moins un second motif dont les longueurs et/ou la répartition spatial définissent un code qui permet d'identifier un site sans ambiguité; lesdites valeurs prélevées étant sélectionnées par des signaux de commande (H) dérivés de la reconnaissance par lesdits moyens de décodage de chaque phase d'exploration de ladite structure spécifique; chaque valeur prélevée étant significative de l'interation optique de ladite tache avec un motif de prégravure contribuant à matérialiser l'axe optique moyen de l'élément de piste en cours d'exploration; ledit signal compensateur changeant de valeur de manière discrète par modification du contenu d'un circuit à mémoire compris dans les moyens de mesure.

11. Dispositif optique selon la revendication 10, caractérisé en ce que ledit signal compensateur (ε) est issu de la comparaison de deux composantes dudit signal électrique (VD), respectivement produites par deux cellules photodétectrices adjacentes appartenant auxdits moyens photodétecteurs (10); lesdites composantes représentant l'interaction de ladite tache avec un motif de prégravure centré situé dans chacun desdits sites intercalaires (71).

12. Dispositif optique selon la revendication 10, caractérisé en ce que ledit signal compensateur (ε) est issu de la comparaison de deux échantillons provenant d'une même borne de sortie desdits moyens photodétecteurs (10); lesdits échantillons représentent les interactions successives de ladite tache avec deux motifs de prégravure présentant des déports égaux et de signes contraires par rapport audit axe moyen; lesdits motifs en déport étant situés dans lesdits sites intercalaires (71).

13. Dispositif selon l'une quelconque des revendications 10 à 12, caractérisé en ce que les moyens photodétecteurs (10) comprenant au moins une photodiode, les moyens de mesure (11) du signal compensateur (ε) comprennent au moins un circuit échantillonneur-bloqueur destiné à mesurer l'amplitude de signal électrique généré par ladite photodiode à un instant déterminé par une fenêtre de temps coïncidant avec le passage d'un élément discret de prégravure affecté au suivi de piste dans la portion de la surface de référence éclairée par ladite tache et à mémoriser cette mesure pendant l'intervalle de temps s'écoulant entre deux mesures successives.

14. Dispositif selon l'une quelconque des revendications 10 à 12, caractérisé en ce que les moyens photodétecteurs (10) comprenant au moins une photodiode, les moyens de mesure (11) comportant au moins un intégrateur de signal recevant en permanence le signal électrique généré par ladite photodiode pendant la fenêtre de temps s'écoulant durant le passage d'au moins une portion déterminée dudit élément discret de prégravure affecté au suivi de piste dans la portion de la surface de référence éclairée par ladite tache et mémorisant le signal ainsi intégré pendant l'intervalle de temps s'écoulant entre deux mesures successives.

15. Dispositif selon la revendication 13, caractérisé en ce que des moyens d'échantillonnage (12) génèrent une impulsion brève centrée sur lesdits fenêtres de temps appliquées au circuit échantillonneur-bloqueur et autorisant la prise en compte de ladite mesure.

16. Dispositif selon la revendication 14, caractérisé en ce que des moyens d'échantillonnage (12) génèrent les impulsions de durées égales synchronisées sur lesdits fenêtres de temps et transmises audit intégrateur pour autoriser l'intégration pendant les intervalles desdites fenêtres de temps.

17. Dispositif selon l'une quelconque des revendications 10 et 12, caractérisé en ce que lesdits éléments discrets de prégravure (71) étant divisés en plusieurs portions et comportant une première (711-G) et une seconde (711-D) portions décalées respectivement de part et d'autre dudit axe moyen (70), les moyens de mesure (11) sont dédoublés et comprennent un premier moyen (110) effectuant une mesure synchronisée sur le passage dans la portion de la surface de référence éclairée par ladite tache de la portion (711-G) desdits éléments de prégravure décalée d'un premier côté dudit axe moyen (70) et mémorisant cette mesure dans l'intervalle de temps s'écoulant entre deux mesures successives et un second moyen (111) de mesure effectuant une mesure synchronisée sur le passage de la portion (711-D) desdits éléments discrets et prégravure décalée de l'autre côté dudit axe moyen (70) et mémorisant cette mesure dans l'intervalle de temps s'écoulant entre deux mesures successives, un moyen de comparaison (112) à entrées différentielles recevant continuement les signaux mémorisés par lesdits premier (110) et second (111) moyens de mesure et un moyen de fitrage passe-bas (113) délivrant un signal de rétroaction lissé (ε) appliqué à des moyens de déplacement de ladite tache.

18. Dispositif selon l'une quelconque des revendications 10 à 17, caractérisé en ce que le moyen d'exploration optique de ladite piste comprend des moyens l'inhibition destinés à empêcher ladite tache lumineuse de modifier les caractéristiques optiques de la surface de référence lors de l'exploration desdits sites intercalaires; ledit moyen d'exploration optique étant capable de modifier lesdites caractéristiques optiques au cours de l'exploration des sites de stockage de l'information; lesdits moyens d'inhibition étant commandés par lesdits signaux de commande.

**Patentansprüche**

1. Informationsträger, der wenigstens auf einer optisch beschreibbaren Teilfläche einen Satz von benachbarten Spurelementen (7) aufweist, längs denen eine Folge von für die Speicherung von optisch lesbarer Information geeigneten, nicht zusammenhängenden Orten (72) angeordnet ist, wobei die Speicherorte (72) voneinander durch Zwischenorte (71) getrennt sind, die Muster zur Markierung der einen konstanten Krümmungsradius besitzenden und die vom Informationseinschreibmittel zu verfolgende ideale Bahn darstellenden Mittellinie (70) der Spurelemente (7) aufweisen, wobei die Muster in der diskreten Gestalt zusammenhängender und geschlossene Umrisse besitzender Bereiche der Teilfläche auftreten und ihre optischen Eigenschaften bei der Speicherung von Informations behalten und wobei jeder der Zwischenorte wenigstens ein erstes in bezug auf die Mittellinie (70) mittiges Muster aufweist, dadurch gekennzeichnet, daß jeder der Zwischenorte wenigstens ein zweites Muster (711-G oder 711-D) aufweist, wobei die Muster in der zur Mittelachse (70) senkrechten Richtung die gleiche Breite besitzen und zusammen längs der Mittelachse (70) eine Struktur bilden, die durch die Länge dieser zwei Muster und/oder durch die räumliche Längen-Verteilung spezifisch ist, welche von einem Zwischenort zum nächsten dieselbe ist.

2. Informationsträger, der wenigstens auf einer optisch beschreibbaren Teilfläche einen Satz von benachbarten Spurelementen (7) aufweist, längs denen eine Folge von für die Speicherung von optisch lesbarer Information geeigneten, nicht zusammenhängenden Orten (72) angeordnet ist, wobei die Speicherorte (72) voneinander durch Zwischenorte (71) getrennt sind, die Muster zur Markierung der einen konstanten Krümmungsradius besitzenden und die vom Informationseinschreibmittel zu verfolgende ideal Bahn darstellenden Mittellinie (70) der Spurelemente (7) aufweisen, wobei die Muster in der diskreten Gestalt zusammenhängender und geschlossene Umrisse besitzender Bereiche der Teilfläche auftreten und ihre optischen Eigenschaften bei der Speicherung von Information behalten und wobei jeder der Zwischenorte wenigstens ein erstes, in bezug auf die Mittellinie (70) mittiges Muster aufweist, dadurch gekennzeichnet, daß jeder der Zwischenorte wenigstens ein zweites Muster (711-G oder 711-D) aufweist, wobei die Muster zusammen längs der Mittelachse (70) eine Struktur bilden, die durch die Länge dieser zwei Muster und/oder durch die räumliche Längen-Verteilung spezifisch ist, welche von einem Zwischenort zum nächsten dieselbe ist, und daß das erste Muster in der zur Mittelachse senkrechten Richtung eine zur Breite der Spuren im wesentlichen äquivalente Breite besitzt.

3. Informationsträger, der wenigstens auf einer optisch beschreibbaren Teilfläche einen Satz von benachbarten Spurelementen (7) aufweist, längs denen eine Folge von für die Speicherung von optisch lesbarer Information geeigneten, nicht zusammenhängenden Orten (72) angeordnet ist, wobei die Speicherorte (72) voneinander durch Zwischenorte (71) getrennt sind, die Muster zur Markierung der einen konstanten Krümmungsradius besitzenden und die von Informationseinschreibmittel zu verfolgende ideale Bahn darstellenden Mittellinie (70) der Spurelemente (7) aufweisen, wobei die Muster in der diskreten Gestalt zusammenhängender und geschlossene Umrisse besitzender Bereiche der Teilfläche auftreten und ihre optischen Eigenschaften bei der Speicherung von Information behalten und wobei jeder der Zwischenorte wenigstens ein erstes, in bezug auf die Mittellinie (70) mittiges Muster aufweist, dadurch gekennzeichnet, daß jeder der Zwischenorte wenigstens ein zweites Muster (711-G oder 711-D) aufweist, das in bezug auf diese Linie versetzt ist, wobei die Projektion des zweiten Musters (711-G oder 711-D) auf eine zur Mittellinie (70) senkrechte Linie nicht in der Projektion des ersten Musters (710) auf dieselbe Linie enthalten ist, und wobei die Muster zusammen längs der Mittelachse eine Struktur bilden, die durch die Länge dieser zwei Muster und/oder durch die räumliche Längen-Verteilung spezifisch ist, welche von einem Zwischenort zum nächsten dieselbe ist.

4. Träger gemäß den Ansprüchen 1 bis 3, dadurch gekennzeichnet, daß die räumliche Aufteilung der Zwischenorte (71) längs der Spurelemente (7) gleichmäßig ist.

5. Träger gemäß einem der Ansprüche 1 bis 4, dadurch gekennzeichnet, daß der Träger Scheibenform besitzt und die Mittellinien (70) der Spurelemente (7) auf der Teilfläche die Form von spiralförmigen, konzentrischen, äquidistanten Kreisen annehmen.

6. Träger gemäß einem der Ansprüche 1 bis 5, dadurch gekennzeichnet, daß jedes der mittigen Muster von einem glatten Stück der Spur mit konstanter Breite, die durch eine optisch feststellbare Veränderung der Teilfläche definiert ist, gebildet wird.

7. Träger gemäß einem der Ansprüche 1 bis 6, dadurch gekennzeichnet, daß jeder der mit einem der Speicherorte (72) zusammenhängenden Zwischenorte (71, 71') mit einem Hilfsvorgravurmuster versehen ist, das in bezug auf die Mittellinie (70) eine seitliche Versetzung aufweist, wobei die Mittellinie (70) in gleichem Abstand von dem Hilfsvorgravurmuster und von einem weiterern Hilfsvorgravurmuster, das eine seitliche Versetzung in entgegengesetzter Richtung und gleiche Größe aufweist, angeordnet ist und wobei die Hilfsvorgravurmuster in bezug auf die Struktur vorgegebene Positionen belegen.

8. Träger gemäß Anspruch 7, dadurch gekennzeichnet, daß zwei aufeinanderfolgende Zwischenorte (71, 71') ein Versetzungsmuster (711-G), das bezüglich der Mittellinie (70) auf eine Seite versetzt ist, bzw. ein Versetzungsmuster (711-D), das bezüglich der Mittellinie (70) auf die andere Seite versetzt ist, aufweisen.

9. Träger gemäß Anspruch 7, dadurch gekennzeichnet, daß jeder Zwischenort (71, 71') aufeinanderfolgend ein erstes Versetzungsmuster (711-G) das bezüglich der Mittellinie (70) auf eine Seite versetzt ist, und ein zweites Versetzungsmuster (711-D), das bezüglich der Mittellinie (70) auf die andere Seite versetzt ist, aufweist.

10. Optische Vorrichtung für die radiale Verfolgung einer Spur, die sich wenigstens auf einer Teilfläche eines Informationsträgers befindet, der in Form eines Satzes von benachbarten Spurelementen (7) gegeben ist, längs denen eine Folge von für die Speicherung von optisch lesbarer Information geeigneten, nicht zusammenhängenden Orten (72) angeordnet ist, wobei die Speicherorte (72) voneinander durch Zwischenorte (71) getrennt sind, die jeweils wenigstens ein erstes, in bezug auf eine einen konstanten Krümmungsradius besitzende und die vom Mittel zur optischen Abtastung der Spur zu verfolgende ideale Bahn darstellende Mittellinie (70) mittiges Muster aufweisen, wobei das Mittel zur optischen Abtastung durch einen Lichtfleck gebildet wird, der von der Vorrichtung, die der Mittellinie (70) folgen soll, ausgegeben wird, wobei die Muster Vorgravurmuster sind, die ihre optischen Eigenschaften beim Speichern der Information behalten und in der diskreten Gestalt nicht zusammenhängender und geschlossene Umrisse besitzender Bereiche der Teilfläche auftreten, wobei die Vorrichtung Fotodetektormittel (10), die aufgrund der aus demjenigen Bereich der Teilfläche, der durch den Fleck bestrahlt wird, hervorgehenden Strahlung ein elektrisches Signal (VD), das für eine Querverschiebung des Flecks in bezug auf die Spurelemente empfindlich ist, liefern, und Mittel zum Messen (11) der Wechsel von einem Vorgravurmuster zum folgenden, die empfindlich für die Werte der ausschließlich im Verlauf der Abtastung der Zwischenorte abgegriffenen Signale sind und ein Kompensationssignal (ε) erzeugen, das der Aufrechterhaltung des Leseflecks zwischen den idealen Bahnen der zwei eingrenzenden Spurelemente dient, umfaßt, dadurch gekennzeichnet, daß Dekodierungsmittel das elektrische Signal analysieren, um unter Ausschluß von Zwischenorten, die wenigstens ein erstes, mittiges Muster mit einer Breite aufweisen, die größer als die Breite der Spur ist, trennscharf die durch den Fleck ausgeübte Abtastung einer bestimmten Struktur anhand ihrer räumlichen Aufteilung in Längsrichtung, die durch den Abstand zwischen dieser Struktur und dem folgenden Zwischenort gegeben ist, wiederzuerkennen, wobei die Struktur in jedem Zwischenort wenigstens das erste mittige Muster und wenigstens ein zweites Muster, deren Längen und/oder deren räumliche Aufteilung einen die eindeutige Identifikation eines Ortes erlaubenden Kode definieren, umfaßt, wobei die abgegriffenen Werte durch Steuersignale (H) ausgewählt werden, die aus der von den Dekodierungsmitteln ausgeführten Erkennung einer jeden Abtastphase der bestimmten Struktur abgeleitet werden, wobei jeder abgegriffene Wert die optische Wechselwirkung des Flecks mit einem Vorgravurmuster, das zur Markierung der optischen Mittellinie des Spurelementes im Verlauf der Abtastung beiträgt, angibt, und wobei das Kompensationssignal den Wert durch die Abwandlung des Inhalts einer in den Meßmitteln enthaltenen Speicherschaltung auf diskrete Weise ändert.

11. Optische Vorrichtung gemäß Anspruch 10, dadurch gekennzeichnet, daß das Kompensationssignal (ε) aufgrund des Vergleichs zweier Komponenten des elektrischen Signals (VD), die von zwei den Fotodetektormitteln (10) zugehörigen, benachbarten Fotodetektorzellen erzeugt werden, ausgegeben wird, wobei die Komponenten die Wechselwirkung des Flecks mit einem mittigem Vorgavurmuster, das in jedem der Zwischenorte (71) angeordnet ist, darstellen.

12. Optische Vorrichtung gemäß Anspruch 10, dadurch gekennzeichnet, daß das Kompensationssignal (ε) aufgrund des Vergleichs zweier von selben Ausgangsanschluß der Fotodetektormittel (10) ausgegebener Abtastwerte ausgegeben wird, wobei die Abtastwerte die aufeinanderfolgenden Wechselwirkungen des Flecks mit zwei Vorgravurmustern, die in bezug auf die Mittellinie gleiche Versetzungen mit entgegengesetztem Vorzeichen besitzen, darstellen und wobei die Versetzungsmuster in den Zwischenorten (71) angeordnet sind.

13. Vorrichtung gemäß einem der Ansprüche 10 bis 12, dadurch gekennzeichnet, daß die Fotodetektormittel (10) wenigstens eine Fotodiode aufweisen, daß die Meßmittel (11) des Kompensationssignals (ε) wenigstens eine Abtast- und Sperrschaltung umfassen, die einerseits der Messung der Amplitude des elektrischen Signals dient, das von der Fotodiode in einem von einem Zeitfenster bestimmten Moment erzeugt wird, wobei das Zeitfenster mit dem Durchlaufen eines diskreten Vorgravurelementes, das während der Spurverfolgung einem vom Fleck beleuchteten Bereich der Teilfläche zugeordnet wird, übereinstimmt, und andererseits der Speicherung dieser Messung während des zwischen zwei aufeinanderfolgenden Messungen liegenden Zeitintervalls dient.

14. Vorrichtung gemäß einem der Ansprüche 10 bis 12, dadurch gekennzeichnet, daß die Fotodetektormittel (10) wenigstens eine Fotodiode umfassen und die Meßmittel (11) wenigstens einen Signalintegrator umfassen, der einerseits das von der Fotodiode während des Zeitfensters erzeugte elektrische Signal ständig empfängt, wobei das Zeitfenster mit dem Durchlaufen wenigstens eines bestimmten Anteils des diskreten Vorgravurelementes, der bei der Spurfolgung dem von dem Fleck beleuchteten Bereich der Teilfläche zugeordnet wird, übereinstimmt, und der andererseits das somit integrierte Signal während des zwischen zwei aufeinanderfolgenden Messungen liegenden Zeitintervalls speichert.

15. Vorrichtung gemäß Anspruch 13, dadurch gekennzeichnet, daß Abtastmittel (12) einen um die Zeitfenster zentrierten kurzen Impuls erzeugen, der an die Abtast- und Sperrschaltung gegeben wird und die Ausführung der Messung bewirkt.

16. Vorrichtung gemäß Anspruch 14, dadurch gekennzeichnet, daß die Abtastmittel (12) Impulse gleicher Dauer, die mit den Zeitfenstern synchronisiert sind, erzeugen, die an den Integrator übertragen werden, um während der Zeitfensterintervalle die Integration zu bewirken.

17. Vorrichtung gemäß einem der Ansprüche 10 und 12, dadurch gekennzeichnet, daß die diskreten Vorgravurelemente (71) in eine Mehrzahl von Bereichen unterteilt werden und einen ersten (711-G) und einen zweiten (711-D) Bereich aufweisen, die auf die eine bzw. die andere Seite der Mittellinie (70) versetzt sind, und daß die Meßmittel (11) aufgeteilt sind und ein erstes Mittel (110), das eine zur Durchlaufzeit desjenigen in dem von dem Fleck beleuchteten Abschnitt der Teilfläche befindlichen Anteils (711-G) der Vorgravurelemente, die auf eine erste Seite der Mittellinie (70) versetzt sind, synchronisierte Messung ausführt und diese Messung während des zwischen zwei aufeinanderfolgenden Messungen liegenden Zeitintervalls speichert, und ein zweites Meßmittel (111), das eine zur Durchlaufzeit desjenigen Anteils (711-D) der diskreten Vorgravurelemente, die auf die andere Seite der Mittellinie (70) versetzt sind, synchronisierte Messung bewirkt und diese Messung während des zwischen zwei aufeinanderfolgenden Messungen liegenden Zeitintervalls speichert, ein Vergleichsmittel (112) mit differentiellen Eingängen, das ununterbrochen die von den ersten (110) und zweiten (111) Meßmitteln gespeicherten Signale empfängt, und ein Tiefpaßfilter (113), das ein geglättetes Rückkopplungssignal (ε), das in die Mittel zum Verschieben des Flecks eingegeben wird, liefert, umfassen.

18. Vorrichtung gemäß einem der Ansprüche 10 bis 17, dadurch gekennzeichnet, daß das Mittel zur optischen Abtastung der Spur bestimmte Hemmungsmittel umfaßt, um den Lichtfleck daran zu hindern, die optischen Eigenschaften der Teilfläche während der Abtastung der Zwischenorte zu verändern, wobei die Mittel zur optischen Abtastung die optischen Eigenschaften im Verlauf der Abtastung der Informationsspeicherorte abwandeln können und wobei die Hemmungsmittel von den Steuersignalen gesteuert werden.

**Claims**

1. An information carrying medium comprising in at least one reference surface adapted for optical recording an array of adjacent track elements (7) along which there is arranged a sequence of non-contiguous sites (72) intended for the storing of information in an optically readable form, the said storing sites (72) being separated from each other by interstitial sites (71) comprising motifs for producing the mid non-sinuous axis (70) of the said track elements (7), which represents the ideal path to be followed by the transcriptor means of the said information; the said motifs being in the discrete form of non-contiguous portions with completed outlines of the said reference surface and maintaining their optical characteristics during said information storage, each of the said interstitial sites comprising at least one first motif centered on the said mid axis (70), characterized in that each of the said interstitial sites comprises at least one second motif (711-G or 711-D), the said motifs having the same width as measured perpendicularly to the mid axis (7C) and jointly forming along the said mid axis (7C) a structure, which is specific as regards the length of these two motifs and/or as regards the spatial distribution thereof in the length direction, which is identical to itself from one interstitial site to the next.

2. An information carrying medium comprising in at least one reference surface adapted for optical recording an array of adjacent track elements (7) along which there is arranged a sequence of non-contiguous sites (72) intended for the storing of information in an optically readable form, the said storing sites (72) being separated from each other by interstitial sites (71) comprising motifs for producing the mid non-sinuous axis (70) of the said track elements (7), which represents the ideal path to be followed by the mid transcriptor of the said information; the said motifs being in the discrete form of non-contiguous portions with completed outlines of the said reference surface and maintaining their optical characteristics during said information storage, each of the said interstitial sites comprising at least one first motif centered on the said mid axis (70), characterized in that each of the said interstitial sites comprises at least one second motif (711-G or 711-D), the said motifs jointly forming along the said mid axis (7C) a structure, which is specific as regards the length of these two motifs and/or as regards the spatial distribution thereof in the length direction, which is identical to itself from one interstitial site to the following and in that the first motif has a width, as measured perpendicularly to the mid axis, which is substantially equal to the width of the tracks.

3. An information carrying medium comprising in at least one reference surface adapted for optical recording an array of adjacent track elements (7) along which there is arranged a sequence of non-contiguous sites (72) intended for the storing of information in an optically readable form, the said storing sites (72) being separated from each other by interstitial sites (71) comprising motifs for producing the mid non-sinuous axis (70) of the said track elements (7), same representing the ideal path to be followed by the mid transcriptor of the said information; the said motifs being in the discrete form of non-contiguous portions with completed outlines of the said reference surface and maintaining their optical characteristics during said information storage, each of the said interstitial sites comprising at least one first motif centered on the said mid axis (70), characaterized in that each of the said interstitial sites comprises at least one second motif (711-G or 711-D), offset in relation to this axis; the projection on an axis perpendicular to the mid axis (7C) of the second motif (711-G or 711-D) not being included in the projection on the same axis of the first motif (710), the said motifs jointly forming along the said mid axis a structure which is specific as regards the length of these two motifs and/or their spatial distribution in the length direction, which is identical to itself from one interstitial site to the following.

4. The medium as claimed in any one of the preceding claims 1 through 3, characterized in that the spatial distribution of the said interstitial sites (71) along the said track elements (7) is uniform.

5. The medium as claimed in any one of the preceding claims 1 through 4, characterized in that the medium is in the form of a disk and the said mid axes (70) of the said track elements (7) assume, in the said reference surface, the form of circles configured as concentric equidistant turns.

6. The medium as claimed in any one of the preceding claims 1 through 5, characterized in that each of the centered motifs is a smoothed track frustum with a constant width as defined by an optically detectable modification of the said reference surface.

7. The medium as claimed in any one of the preceding claims 1 through 6, characterized in that each of the two interstitial sites (71, and 71') contiguous to any one of the storing sites (72) is provided with an auxiliary pre-etch motif, which is offset laterally from the said mid axis (70); the said mid axis (70) being placed at an equal distance from the said auxiliary pre-etch motif and from another auxiliary pre-etch motif having lateral misalignment in the opposite direction and having an equal width; the said auxiliary pre-etch motifs occupying positions which are predetermined with respect to the said structure.

8. The medium as claimed in claim 7, characterized in that two consecutive interstitial sites (71 and 71') respectively comprise a misaligned motif (711-G) with offset on one side of the said mid axis (70) and a misaligned motif (711-D) offset on the other side of the said mid axis (70).

9. The medium as claimed in claim 7, characterized in that each interstitial site (71 and 71') successively comprises a first misaligned motif (711-G) offset on one side of the said mid axis (70) and a second misaligned motif (711-D) offset on the other side of the said mid axis (70).

10. An optical device for radially following a track formed in at least one reference surface of a information carrying medium in the form of an array of adjacent elements (7) along which there is placed a sequence of non-contiguous sites (72) intended for storing information in an optically readable form, the said storing sites (72) being separated from each other by interstitial sites (71) each comprising at least one first motif which is centered on a mid non-sinuous axis (70) which represents the ideal trajectory to be followed by the means for optically following the said track, the same being constituted by a light spot trained by the said device for following the said mid axis (70); the said motifs being pre-etch motifs which maintain their optical characteristics during the said storing of information and being in the form of non-contiguous portions with completed outlines of the said reference surface; the said device comprising photodetecting means (10) supplying, in response to the radiation emerging from the portion of the reference surface illuminated by the said spot, an electrical signal (VD) sensitive to the transverse displacement of the said spot in relation to the said track elements and measuring means (11) for variations between one pre-etch motif and the next, the said measuring means being sensitive to values of the said signal detected exclusively during following the said interstitial sites and generating a compensating signal (ε) intended to maintain the said reading spot between the ideal paths of the two elements of the guide track, characterized in that decoding means analyze the said electrical signal in order to recognize selectively the following by the said spot of a structure which is specific with respect to its longitudinal spatial distribution and identical to itself from one interstitial site to the next with the exclusion of interstitial sites comprising at least one first centered motif with a width greater than the width of the track; the said structure comprising jointly in each interstitial site at least the said first centered motif and at least one second motif whose lengths and/or whose spatial distribution define a code which makes it possible to identify a site without abiguity; the said detected values being selected by two command signals (H) derived from the recognition by the said decoding means of each phase of following the said specific structure; each detected value being significant for the optical interaction of the said spot with a pre-etch motif contributing to producing the mid optical axis of the track element during the course of the following action; the said compensating signal changing in value in a discrete manner by modification of the content of a memory circuit comprised in the measuring means.

11. The optical device as claimed in claim 10, characterized in that the said compensating signal (ε) is derived from the comparison of two components of the said electrical signal (VD), respectively produced by two adjacent photodetecting cells belonging to the said photodetecting means (10); the said components representing the interaction of the said spot with a centered pre-etch motif situation in each of the interstitial sites (71).

12. The optical device as claimed in claim 10, characterized in that the compensating signal (ε) is derived from the comparison of two samples taken from the same output terminal of the said photodetecting means (10); the said samples representing the successive interactions of the said spot with two pre-etch motifs having equal misalignments and of opposite sign with respect to the said mid axis; the said motifs with a misalignment being situated in the said interstitial sites (71).

13. The device as claimed in any one of the preceding claims 10 through 12, characterized in that the photodetecting means (10) comprise at least one photodiode, and the means (11) for measuring the compensating signal (ε) comprise at least one sample and hold circuit intended to: measure the amplitude of the electrical signal produced by the said photodiode at an instant as determined by a time window coinciding with the passage of a discrete pre-etch element acted upon on following the track in the portion of the reference surface illuminated by the said spot and storing this measure during the interval of time between successive measurements.

14. The device as claimed in any one of the preceding claims 10 through 12, characterized in that the photodetecting means (10) comprise at least one photodiode, and the measuring means (11) comprise at least one signal integrator permanently receiving the electrical signal produced by the said photodiode during the time window during the passage of at least one given portion of the said discrete pre-etch element acted upon while following the track in the portion of the reference surface illuminated by the said spot and storing the signal integrated in this manner during this time interval between two successive measurements.

15. The device as claimed in claim 13, characterized in that the sampling means (12) produce a brief pulse centered on the said time windows applied to the sample and hold circuit and authorizing the taking into account of the said measure.

16. The device as claimed in claim 14, characterized in that the sampling means (12) produce the pulses of equal duration synchronized to the said time windows and transmitted to the said integrator in order to authorize integration during the intervals of the said time window.

17. The device as claimed in any one of the preceding claims 10 and 12, characterized in that said discrete pre-etch elements (71) are divided up into several portions and comprise a first portion (711-G) and a second portion (711-D) offset respectively on the two opposite sides of the said mid axis (70), the measuring means (11) are duplicated and comprise a first means (110) performing a synchronized measurement on the passage of the portion of the reference surface illuminated by the said spot of the portion (711-G), of the said pre-etch elements offset on a first side of the said mid axis (70) and storing this measure during the time interval between two successive measurements and a second measuring means (111) performing a synchronized measurement on the passage of the portion (711-D), of the said discrete pre-etch elements, offset on the other side of the side of the said mid axis (70) and storing such measure in the time interval between two successive measurements, a comparison means (112) with differential inputs continuously receiving the signals stored by the said first measuring means (110) and the said second measuring means (111) and a low pass filter means (113) supplying a smoothed feedback signal (ε) applied to the means for the displacement of the said spot.

18. The device as claimed in any one of the preceding claims 10 through 17, characterized in that the optical following means for the said track comprises inhibiting means intended to prevent the said light spot from modifying the optical characteristics of the reference surface during following the said interstitial sites; the said following optical following means being capable of modifying the said optical characteristics during the course of following the information storing sites; the said inhibiting means being controlled by the said command signals.

FIG.1

EP 0 089 263 B1

FIG.2

FIG.3

FIG.4

FIG.5

FIG.6

# FIG.7

# FIG.8

# FIG.9

3

# FIG.10

FIG.11

EP 0 089 263 B1